# EUROPÄISCHE PATENTSCHRIFT

(11) **EP 0 734 910 B1**
(45) Veröffentlichungstag und Bekanntmachung des Hinweises auf die Patenterteilung: **07.06.2000**
(21) Anmeldenummer: 96104905.3
(22) Anmeldetag: 27.03.1996
(51) Int. Cl.: B60R 21/13

(54) **Vorrichtung zum Überrollschutz eines Cabrio-Fahrzeugs**
Roll-over protection device for convertible vehicle
Dispositif à arceau de sécurité pour un véhicule décapotable

(30) Priorität: 28.03.1995 DE 19511400
(43) Veröffentlichungstag der Anmeldung: 02.10.1996
(73) Patentinhaber: HS-Products Karosseriesysteme GmbH, 82152 Krailling (DE)
(72) Erfinder: Specht, Martin, 82340 Feldafing (DE); Clausen-Schaumann, Andreas, 82347 Bernried (DE); Banda, Ruth, 80933 München (DE); Heiner, Lothar, 80933 München (DE); Bambach Manfred Dr., 80939 München (DE)
(74) Vertreter: Nöth, Heinz, Dipl.-Phys.

(56) Entgegenhaltungen:
- DE-A- 3 427 537
- DE-A- 3 802 520
- DE-A- 4 341 499

## Beschreibung

Die Erfindung betrifft eine Vorrichtung nach dem Oberbegriff des Patentanspruches 1.

Bei einer derartigen aus der DE-A-38 02 520 bekannten Vorrichtung zum Überrollschutz eines offenen Cabrio-Fahrzeugs ist an beiden Seiten des Fahrzeugs jeweils eine Stützstrebe vorgesehen, welche durch eine von einem Sensor ausgelöste Hubhydraulik aus einer in Ruheposition über die obere Karosserieebene hinausreichende Stützposition bewegt wird. Hierzu sind die beiden Stützstreben in Gelenken an oberen Enden der Federdome an der Hinterachse schwenkbar gelagert. Beim Anheben werden die vorderen Enden der Stützstrebe an die oberen Enden der A-Säulen angehoben und bilden mit diesen einen am Fahrzeugaufbau abgestützten steifen Überrollschutzverbund. Hierbei erfolgt die Verschwenkung der Stützstreben aus der Ruheposition in die schräg über die obere Karosserieebene ragende Stützposition im Bereich der Sitzpositionen der Fahrzeuginsassen.

Bei einer Vorrichtung, welche aus der DE 34 27 537 A1 bekannt ist, wird zum Überrollschutz eines offenen Cabrio-Fahrzeugs eine aus der Fahrzeugtür ausfahrbare Stützstrebe vorgesehen, die durch einen sensorisch ausgelösten Kraftspeicher in Form einer Kolben-Zylindereinheit aus einer durch die Türverkleidung verdeckten Ruheposition in eine über der oberen Karosserieebene hinausreichende Stützposition bewegt wird. In der Stützposition bildet die Stützstrebe zusammen mit der schräg über die obere Karosserieebene ragende A-Säule einen steifen Überrollschutzverbund in Form eines Dreiecksverbundes. Die Abstützung der Stützstrebe an ihrem unteren Ende erfolgt an einer Türaussteifung, welche an der Fahrzeugtür abgestützt ist. Bei einem Unfallgeschehen können die über die Stützstrebe und die Abstützung in die Fahrzeugtür eingeleiteten Kräfte zu einer Verformung der Tür führen, welche die Tür zwischen dem vorderen und hinteren Türpfosten verklemmt, so daß die Tür nur schwierig geöffnet werden kann.

Aufgabe der Erfindung ist es, eine Vorrichtung der eingangs genannten Art zu schaffen, bei der eine für die Fahrzeuginsassen weitgehend gefahrlose Verschwenkung der Stützstreben in die Stützposition erreicht wird.

Diese Aufgabe wird erfindungsgemäß durch das Kennzeichen des Patentanspruches 1 gelöst.

Durch den sensorisch ausgelösten Kraftspeicher wird bei der Erfindung die Stützstrebe aus einer Ruhestellung in eine am Fahrzeugaufbau, insbesondere am Schweller, abgestützte und bevorzugt verriegelte Stützposition bewegt, in welcher sie zusammen mit Fahrzeugfunktionsbauteilen einen steifen Überrollschutzverbund bilden.

In bevorzugter Weise ist die Stützstelle in ihrer Ruhestellung verdeckt am Fahrzeug angeordnet. Erst dann, wenn durch eine Sensoreinrichtung ein Überrollverhalten des Fahrzeugs festgestellt wird, erfolgt mittels des durch den Sensor ausgelösten Kraftspeichers die Bewegung der Stützstrebe in die Stützposition, in welcher sie insbesondere durch die Wirkung des Kraftspeichers verriegelt sind. In dieser Stützposition ragt die Stützstrebe als Verstärkungselement über die obere Karosserieebene hinaus und bildet in bevorzugter Weise einen dreieckförmigen Überrollschutzverbund mit der A-Säule des Fahrzeugs. Hierdurch läßt sich ein steifer Verbund am Fahrzeugaufbau, insbesondere Schweller, erreichen, der beim Überrollen des Fahrzeugs nicht abknickt und für die Insassen einen ausreichenden Überlebensraum schafft.

Der mit der A-Säule des Cabrio-Fahrzeugs gebildete Überrollschutzverbund bewirkt durch das Zusammenwirken der beiden abgestützten A-Säulen, die über einen widerstandsfähigen Dachrahmen miteinander verbunden sind, und der verklebten Verbundglaswindschutzscheibe einen festen und steifen Überrollbügel. Vor allem werden einwirkende punktuelle Kräfte beim Überrollen auf beide Überrollschutzverbundeinrichtungen bei den beiden A-Säulen verteilt.

Anhand der Figuren wird an Ausführungsbeispielen die Erfindung noch näher erläutert. Es zeigt:
- Fig. 1:: ein erstes Ausführungsbeispiel, wobei das als Stützstrebe ausgebildete Verstärkungselement sich in Ruhestellung befindet;
- Fig. 2:: das Ausführungsbeispiel der Fig. 1 mit in Stützposition befindlicher Stützstrebe;
- Fig. 3:: ein zweites Ausführungsbeispiel;
- Fig. 4:: ein Ausführungsbeispiel für eine Anlenkstelle der Stützstrebe am oberen Ende einer A-Säule;
- Fig. 5:: ein Ausführungsbeispiel für eine Kupplung zwischen einem Angriffspunkt des Kraftspeichers und einem unteren Ende der Stützstrebe in Seitenansicht;
- Fig. 6:: das in der Fig. 5 dargestellte Ausführungsbeispiel der Kupplung in Draufsicht;
- Fig. 7:: ein drittes Ausführungsbeispiel mit in Ruheposition befindlicher Stützstrebe; und
- Fig. 8:: das dritte Ausführungsbeispiel bei in Stützposition befindlicher Stützstrebe;

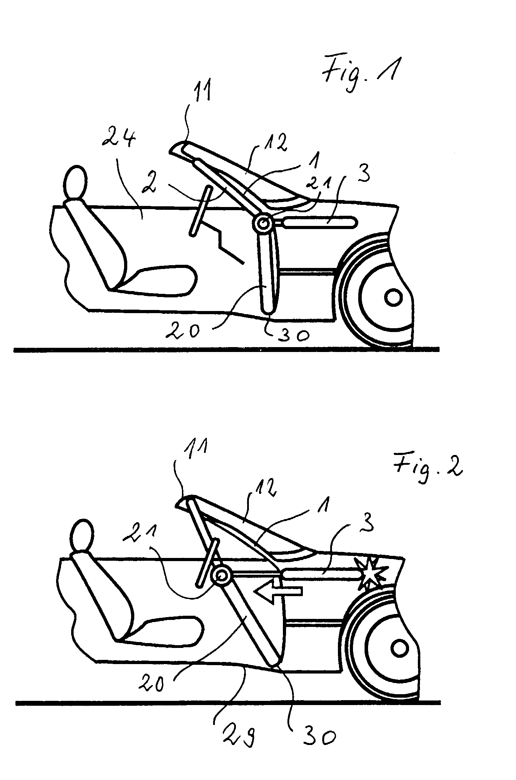

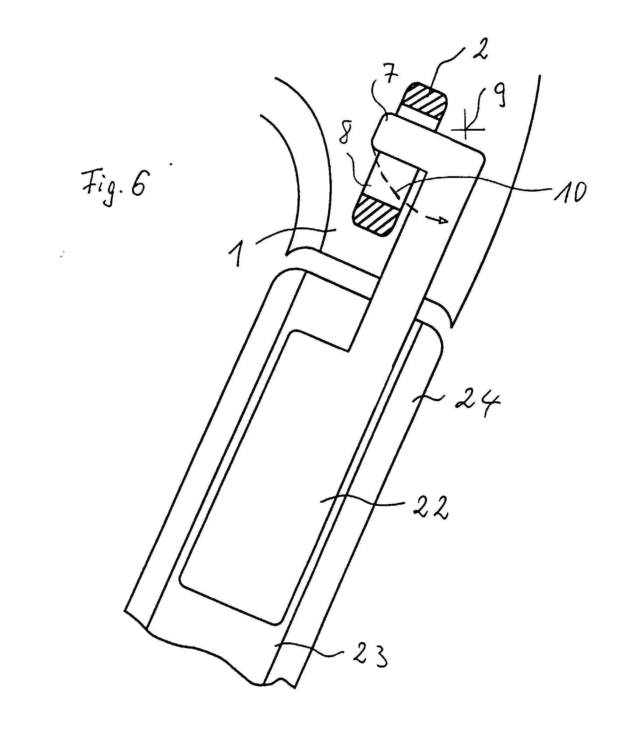

Bei dem in den Figuren 1 und 2 dargestellten Ausführungsbeispiel wird ein Überrollschutzverbund gebildet durch jeweils eine A-Säule 1 und ein als Stützstrebe 2 ausgebildetes Verstärkungselement, welches in seiner Ruheposition, wie die Fig. 1 zeigt, in der A-Säule 1 oberhalb einer Fahrzeugtür 24 in verdeckter Anordnung untergebracht ist. Mit Hilfe eines Kraftspeichers 3, der beispielsweise einen zündbaren pyrotechnischen Gasgenerator mit in einem Zylinder antreibbaren Kolben aufweist, wird die Stützstrebe 2, wie in Fig. 2 dargestellt ist, in ihre Stützposition gebracht. In der endgültigen Stellung, nämlich der Stützstellung, bildet die Stützstrebe 2 mit der A-Säule 1 einen dreieckförmigen Stützverbund. Die Stützstrebe 2 wird, wie noch erläutert wird, aus der A-Säule so geführt, daß sich die Tür 24 nach Überwindung einer bestimmten Haltekraft, welche in einer Anlenkstelle 4 am oberen Ende der A-Säule 1 auf die Stützstrebe 2 wirkt, öffnen läßt. Beim dargestellten Ausführungsbeispiel wird die Stützstrebe 2 aus der in Fig. 1 dargestellten verdeckten Position mit Hilfe des ausgelösten Kraftspeichers 3 in die Stützposition der Fig. 6 gebracht. Die Stützstrebe 2 ist gelenkig mit einem Stützfuß 20 verbunden, der sich am Fahrzeugaufbau 29 im Schwellerbereich an einer Stelle 30 abstützt. Die Antriebskraft des Kraftspeichers 3 kann an einer Gelenkstelle 21 zwischen Stützfuß 20 und Stützstrebe 2 angreifen. Bei dieser Ausführungsform kann eine Verriegelung der Stützstrebe 2 in ihrer Stützposition erfolgen.

Bei der Bewegung von der Ruheposition in die Stützposition durchläuft die Gelenkstelle 21 eine Totpunktposition. Dabei kann in der Stützposition die Stützstrebe 2 durch den Kraftspeicher 3 verriegelt werden. Dies kann beispielsweise durch eine in bekannter Weise ausgebildete Rücklaufsperre im Kolben/Zylinderantrieb des Kraftspeichers 3 (z.B. DE 43 32 206 A1) bewirkt werden.

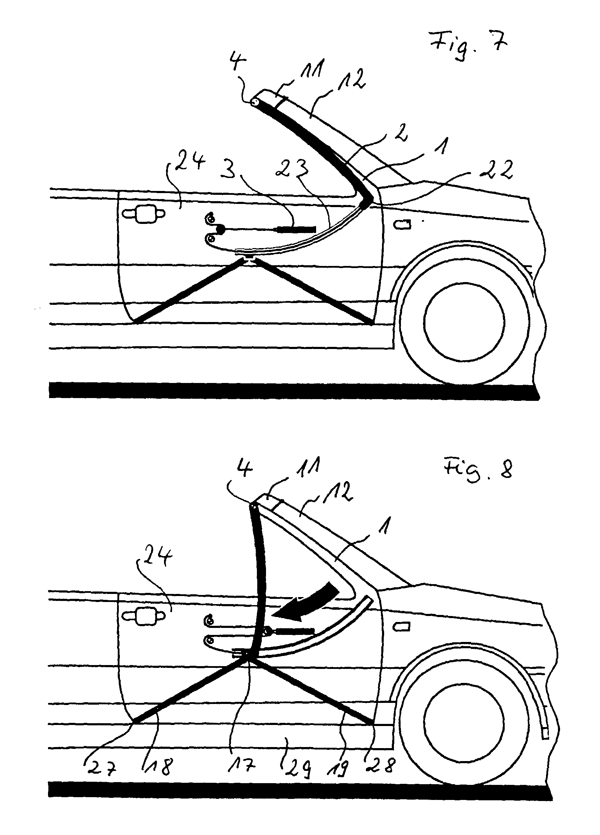

Bei dem in den Figuren 7 und 8 dargestellten Ausführungsbeispiel wird eine als Pendelstütze ausgebildete Stützstrebe 2 aus der in der Fig. 7 dargestellten verdeckten Ruheposition in der A-Säule 1 in die in der Fig. 8 dargestellten Stützposition verschwenkt.

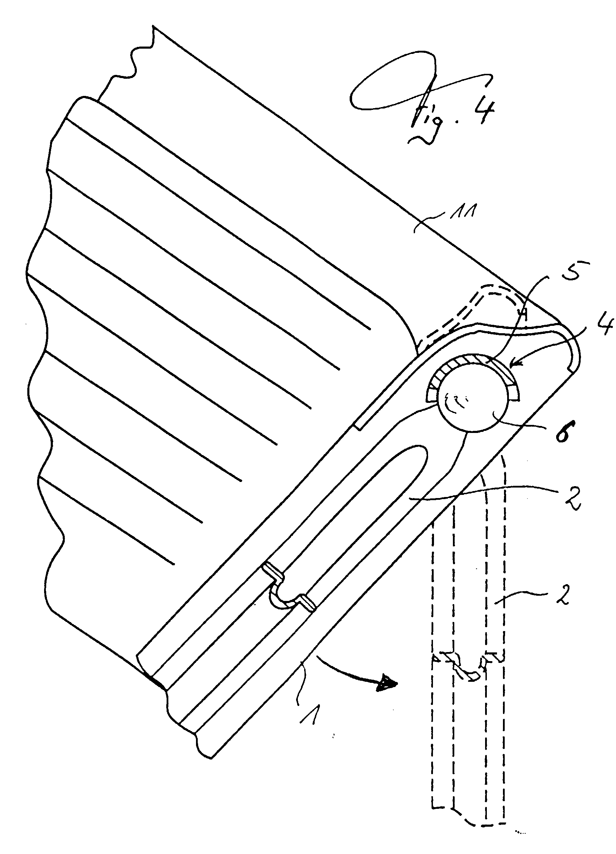

Hierzu ist die Stützstrebe 2 am oberen Ende der A-Säule 1 des Kraftfahrzeugs in der Anlenkstelle 4 angelenkt. Die Anlenkstelle 4 bildet für die Stützstrebe einen Drehpunkt an der A-Säule 1 und kann beispielsweise als Kugelgelenk (Fig. 4) ausgebildet sein.

In der Fahrzeugtür 24 ist eine Führungsschiene 23 vorgesehen, in welcher die Stützstrebe 2 bei ihrer Schwenkbewegung in die Stützposition (Fig. 8) läuft. Mit Hilfe eines Pendelstützfußes 22 ist die Stützstrebe 2 in der Führungsschiene 23 gelagert. Die Führungsschiene 23 setzt sich bis in den unteren Bereich der A-Säule 1 fort, so daß ein kontinuierlicher Übergang des Teils der Führungsschiene 23 in der Fahrzeugtür 24 und in dem unteren Bereich der A-Säule 1 hergestellt ist. Hierdurch wird gewährleistet, daß die Schwenkbewegung der Stützstrebe 2 aus der Ruheposition (Fig. 7) in die Stützposition (Fig. 8) hindernisfrei erfolgt.

Auch bei dieser Ausführungsform kann die Stützstrebe 2 in der Stützposition der Fig. 8 gegenüber dem Fahrzeugaufbau 29 verriegelt werden. Dies kann beispielsweise durch eine zwischen der Führungsschiene 23 und dem Pendelstützfuß 22 wirkende Verriegelungseinrichtung bewirkt werden. Es ist jedoch auch möglich, im Kraftspeicher 3 eine Rücklaufsperre vorzusehen, welche die Stützstrebe 2 in der Endposition der Fig. 8 festhält. In dieser Stützposition ist die Stützstrebe 2 in einem Knotenpunkt 17, in welchem zwei Streben 18 und 19 zusammenlaufen, abgestützt. Die Streben 18 und 19 bilden den Kraftfluß zum Fahrzeugaufbau 29, wobei zwei weitere Knotenpunkte 27 und 28 an den unteren Enden der Streben 18 und 18 im Bereich der Verbindungsstellen des vorderen und hinteren Türpfostens mit dem Schweller des Fahrzeugaufbaus 29 erreicht werden. Dabei wird durch die gebogene Führungsschiene 23 und die Streben 18 und 19 ein zusätzlicher Seitenaufprallschutz gewährleistet.

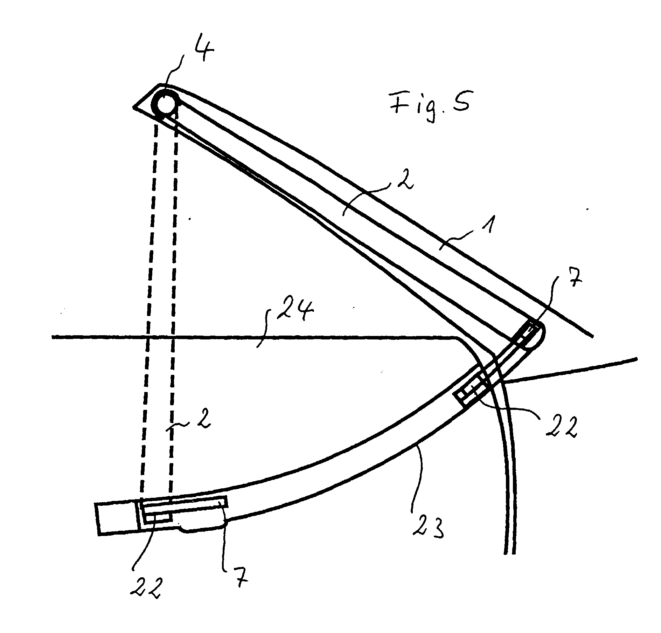

Es ist auch möglich, wie in den Figuren 5 und 6 gezeigt, zwischen dem Pendelstützfuß 22 und der Stützstsrebe 2 einen trennbaren Formschluß in Form einer Mitnehmerklaue, die beim Spiegeldreieck integriert ist, als Mitnehmer 7 vorzusehen. Beim Schließen der Tür 24 greifen Stützstreben 2 und Pendelstützfuß 22 ineinander. Beim Öffnen der Tür 24 wird dieser Formschluß getrennt. Bei geschlossener Tür liegt das Mitnehmerelement 7 in einer Ausnehmung 8 am unteren Ende der Stützstrebe 2. Wenn die Fahrzeugtür 24 geöffnet wird, verschwenkt sie um eine Schwenkachse 9, wobei auch das Mitnehmerelement 7 entlang einem Schwenkweg 10 verschwenkt wird. Dabei gelangt das Mitnehmerelement aus der Ausnehmung 8. Bei geschlossener Tür (Fig. 6) liegt das Mitnehmerelement 7, welches auf dem Schwenkweg 10 um die Schwenkachse 9 zurückgeschwenkt ist, wieder in der Ausnehmung 8. Wenn der Kraftspeicher 3 den Pendelstützfuß 22 antreibt, nimmt das daran befestigte Mitnehmerelement 7 aufgrund seines Eingriffes in die Ausnehmung 8 das untere Ende der Stützstrebe 2 mit und bewegt es in die Stützposition (z.B. Fig. 8). Wie insbesondere aus der Fig. 6 zu ersehen ist, wird dabei das untere Ende der Stützstrebe 2 in die Führungsschiene 32 aus der A-Säule 1 bewegt. Da das untere Ende der Stützstrebe 2 mit der Führungsschiene 23 in der Ruheposition ausgerichtet ist, erfolgt dieser Übergang hindernisfrei. Auch an einem Teil des Gelenkes 21 des Ausführungsbeispiels der Figuren 1 und 2 kann an einem Gelenkteil ein Mitnahmeelement 7, beispielsweise in Form einer Mitnehmerklaue, vorgesehen sein, welches, wie die Figuren 5 und 6 zeigen, in das untere Ende der Stützstrebe 2 eingreift.

Die Anlenkstelle 4 ist in bevorzugter Weise so ausgebildet, wie es in der Fig. 4 dargestellt ist. Das in der Fig. 4 dargestellte Ausführungsbeispiel ist als Kugelgelenk ausgebildet. Dieses besitzt am oberen Ende der Stützstrebe 2 eine Gelenkkugel 6, die in einer Kugelpfanne 5 mit drei Freiheitsgraden gelagert ist. Die Kugelpfanne 5 kann beispielsweise aus Kunststoff bestehen. Die Gelenkkugel 6 wird mit einer bestimmten Haltekraft in der Kugelpfanne 5 gehalten. Wenn diese Haltekraft überwunden wird, läßt sich die Kugel aus der Kugelpfanne 5 entfernen. Auf diese Weise wird gewährleistet, daß auch bei in die Stützposition geschwenkter Stützstrebe 2 (Fig. 8) die Tür des Fahrzeugs bei Überwindung der Haltekraft in der Anlenkstelle 4 geöffnet werden kann.

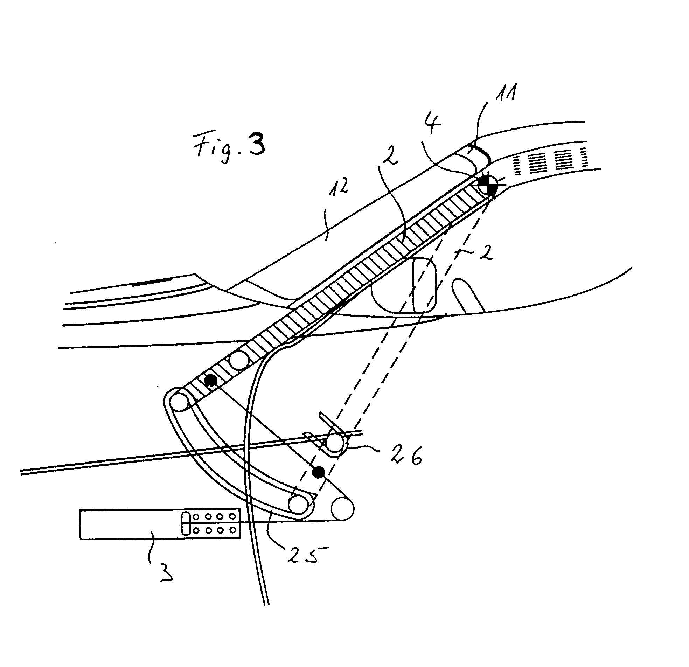

Auch bei dem in der Fig. 3 dargestellten Ausführungsbeispiel ist die Stützstrebe 2 im oberen Teil der A-Säule 1 in der als Drehpunkt wirkenden Anlenkstelle 4 gelagert. Auch diese Anlenkstelle kann durch ein Kugelgelenk, wie es in der Fig. 4 dargestellt ist, gebildet werden. Am unteren Ende ist die Stützstrebe 2 im Bereich des Armaturenbretts am Fahrzeugaufbau in einer Führungskulisse 25 geführt. In der ausgezogenen Stellung befindet sich die Stützstrebe 2 in verdeckter Anordnung in der A-Säule. Aus dieser Stellung wird sie in die strichliert dargestellte Stützposition innerhalb der Führungskulisse 25 um die Anlenkstelle 4 geschwenkt, bis sie die Endposition (Stützposition) am anderen Ende der Führungskulisse 25 einnimmt. Der Bewegungsantrieb wird von dem Kraftspeicher 3 geliefert. Es können anstelle der einen Führungskulisse 25 zwei Führungskulissen (Zusatzkulisse 26) vorgesehen sein. Hierdurch erreicht man eine verbesserte Stützfunktion in der Stützposition der Stützstrebe 2.

Bei den erläuterten Ausführungsbeispielen, bei welchen durch die Stützstrebe 2 und die A-Säule 1 ein steifer Dreieckverbund gebildet wird, erreicht man in Zusammenwirkung mit einem widerstandsfähigen Dachrahmen 11 und einer verklebten Verbundglaswindschutzscheibe 12 einen wirkungsvollen Überrollschutz. Insbesondere punktuell einwirkende Kräfte werden dabei auf die beiden A-Säulen und die Stützstreben 2 verteilt. Auf die Stützstreben 2 einwirkende Kräfte werden beim Ausführungsbeispiel der Figuren 1 und 2 über den Stützfuß 20 in den Fahrzeugaufbau im Schwellerbereich, insbesondere in den Bereichen, in welchen der vordere Türpfosten auf dem Schweller aufsitzt, an einer Stelle 30 am unteren Ende des Stützfußes 2 eingeleitet. Bei dem Ausführungsbeispiel der Figuren 7, 8 werden die von den Stützstreben 2 ausgehenden Kräfte über die Streben 18, 19 an den Abstützstellen 27 und 28 in den Fahrzeugaufbau, insbesondere im Schwellerbereich, eingeleitet. Die Knotenpunkte bildende Abstützstellen 27 und 28 an den unteren Enden der Streben 18, 19 befinden sich an den Stellen, an denen der vordere und hintere Türpfosten auf dem Schweller des Fahrzeugaufbaus 29 aufsitzen. Die Abstützstellen 27, 28 (Figuren 7, 8) sowie die Abstützstelle 30 (Figuren 1, 2) befinden sich innerhalb der Türverkleidungen und stützen sich über die Türverkleidung gegebenenfalls elastisch an den jeweiligen Stellen des Fahrzeugaufbaus 29 im Schwellerbereich ab.

Der Kraftspeicher 3 kann in herkömmlicher Weise ausgebildet sein. Z.B. kann ein von einem pyrotechnischen Treibmittel oder einer Schraubenfeder in einem Rohr angetriebener Kolben, der mit einem Zugmittel (Zugseil) verbunden ist, verwendet werden. Die Rücklaufsperre kann in den Kolben integriert sein.

## Patentansprüche

1. Vorrichtung zum Überrollschutz eines Cabrio-Fahrzeuges mit einer ausfahrbaren Stützstrebe (2), die durch einen sensorisch ausgelösten Kraftspeicher (3) aus einer verdeckten Ruheposition in eine über die obere Karosserieebene hinausreichende Stützposition bewegbar ist, in welcher sie zusammen mit der schräg über die obere Karosserieebene ragenden A-Säule einen steifen Überrollschutzverbund bildet, wobei die Stützstrebe (2) in der Stützposition über eine Abstützeinrichtung (18, 19; 20) am Fahrzeugaufbau (29) abgestützt ist,
dadurch gekennzeichnet,
daß die Stützstrebe (2) um eine am oberen Ende der A-Säule (1) vorgesehene und als Drehpunkt ausgebildete Anlenkstelle (4) in die Stützposition schwenkbar ist.

2. Vorrichtung nach Anspruch 1, dadurch gekennzeichnet, daß der jeweilige Überrollschutzverbund an einem oder mehreren Knotenpunkten (17, 27, 28, 30), die am Fahrzeug vorhanden sind, abgestützt ist.

3. Vorrichtung nach einem der Ansprüche 1 oder 2, dadurch gekennzeichnet, daß die Abstützeinrichtung (18, 19; 20) im Schwellerbereich am Fahrzeugaufbau (29) abgestützt ist.

4. Vorrichtung nach einem der Ansprüche 1 bis 3, dadurch gekennzeichnet, daß die Abstützeinrichtung (20) der Stützstrebe (2) als Stützfuß ausgebildet ist, der an seinem unteren Ende am Fahrzeugaufbau (29) abgestützt ist und daß die Stützstrebe (2) und der Stützfuß mit einem Gelenk (21) verbunden sind.

5. Vorrichtung nach Anspruch 4, dadurch gekennzeichnet, daß der Kraftspeicher (3) am Gelenk (21) angreift.

6. Vorrichtung nach einem der Ansprüche 1 bis 5, dadurch gekennzeichnet, daß die Stützstrebe (2) von der A-Säule (1) lösbar ist.

7. Vorrichtung nach Anspruch 6, dadurch gekennzeichnet, daß die Stützstrebe (2) an der Anlenkstelle (4) von der A-Säule (1) lösbar ist.

8. Vorrichtung nach einem der Ansprüche 1 bis 7, dadurch gekennzeichnet, daß die Anlenkstelle (4) als Kugelgelenk (5, 6) ausgebildet ist.

9. Vorrichtung nach einem der Ansprüche 1 bis 8, dadurch gekennzeichnet, daß die Stützstrebe (2) in der Ruheposition in der über die Karosserieebene ragenden A-Säule (1) angeordnet ist.

10. Vorrichtung nach einem der Ansprüche 1 bis 9, dadurch gekennzeichnet, daß die Stützstrebe (2) mit ihrem unteren Ende aus der Ruheposition zu einem von der Abstützeinrichtung (18, 19) gebildeten Knotenpunkt (17) in die Stützposition bewegbar ist.

11. Vorrichtung nach einem der Ansprüche 1 bis 10, dadurch gekennzeichnet, daß der Kraftspeicher (3) über ein Mitnehmerelement (7) wenigstens beim Antrieb in die Stützposition in Eingriff mit der Stützstrebe (2) bringbar ist.

12. Vorrichtung nach Anspruch 11, dadurch gekennzeichnet, daß das Mitnehmerelement (7) beim Öffnen der Kraftfahrzeugtür (24) außer Eingriff mit der Stützstrebe (2) bewegbar ist.

13. Vorrichtung nach einem der Ansprüche 1 bis 12, dadurch gekennzeichnet, daß die Stützposition der Stützstrebe (2) verriegelt ist.

## Claims

1. Apparatus for the roll-over protection of a convertible vehicle comprising an extendable support strut (2) which is movable by a force storage means (3) triggered by sensor means from a concealed rest position into a support position in which it extends above the upper plane of the bodywork and in which, together with the A-pillar projecting inclinedly above the upper plane of the bodywork, it forms a rigid roll-over protection assembly, wherein in the support position the support strut (2) is supported on the vehicle structure (29) by way of a support arrangement (18, 19; 20), characterised in that the support strut (2) is pivotable into the support position about an articulation mounting point (4) which is provided at the upper end of the A-pillar (1) and which is in the form of a pivot.

2. Apparatus according to claim 1 characterised in that the respective roll-over protection assembly is supported at one or more junction points (17, 27, 28, 30) which are present on the vehicle.

3. Apparatus according to one of claims 1 and 2 characterised in that the support arrangement (18, 19; 20) is supported on the vehicle structure (29) in the sill region.

4. Apparatus according to one of claims 1 to 3 characterised in that the support arrangement (20) of the support strut (2) is in the form of a support base which is supported at its lower end on the vehicle structure (29) and that the support strut (2) and the support base are connected with a hinge (21).

5. Apparatus according to claim 4 characterised in that the force storage means (3) engages the hinge (21).

6. Apparatus according to one of claims 1 to 5 characterised in that the support strut (2) is releasable from the A-pillar (1).

7. Apparatus according to claim 6 characterised in that the support strut (2) is releasable at the articulation mounting point (4) from the A-pillar (1).

8. Apparatus according to one of claims 1 to 7 characterised in that the articulation mounting point (4) is in the form of a ball joint (5, 6).

9. Apparatus according to one of claims 1 to 8 characterised in that in the rest position the support strut (2) is arranged in the A-pillar (1) which projects above the plane of the bodywork.

10. Apparatus according to one of claims 1 to 9 characterised in that the support strut (2) is movable with its lower end out of the rest position in relation to a junction point (17) formed by the support arrangement (18, 19) into the support position.

11. Apparatus according to one of claims 1 to 10 characterised in that the force storage means (3) can be brought into engagement with the support strut (2) by way of an entrainment element (7) at least in the case of the drive movement into the support position.

12. Apparatus according to claim 11 characterised in that the entrainment element (7) is movable out of engagement with the support strut (2) upon opening of the motor vehicle door (24).

13. Apparatus according to one of claims 1 to 12 characterised in that the support position of the support strut (2) is locked.

## Revendications

1. Dispositif de protection au retournement d'un véhicule décapotable ayant un montant de support (2) pouvant être déployé, qui peut être déplacé par un accumulateur d'énergie (3) déclenché par capteur à partir d'une position de repos cachée dans une position de support s'étendant au-dessus du plan supérieur de carrosserie, dans laquelle position il forme avec la colonne A se dressant de manière oblique au-dessus du plan supérieur de carrosserie une combinaison de protection au retournement rigide, le montant de support (2) étant appuyé, dans la position de support, sur la carrosserie de véhicule (29) par l'intermédiaire d'un dispositif d'appui (18, 19, 20),
caractérisé en ce que
le montant de support (2) peut être pivoté dans la position de support autour d'un point d'articulation (4) prévu à l'extrémité supérieure de la colonne A (1) et réalisé sous forme de pivot.

2. Dispositif selon la revendication 1, caractérisé en ce que la combinaison de protection au retournement concernée est appuyée à un ou plusieurs noeuds d'assemblage (17, 27, 28, 30), qui sont présents sur le véhicule.

3. Dispositif selon l'une des revendications 1 ou 2, caractérisé en ce que le dispositif d'appui (18, 19, 20) est appuyé dans la zone de seuil sur la carrosserie de véhicule (29) .

4. Dispositif selon l'une des revendications 1 à 3, caractérisé en ce que le dispositif d'appui (20) du montant de support (2) est réalisé sous forme de pied de support, qui est appuyé à son extrémité inférieure sur la carrosserie de véhicule (29), et en ce que le montant de support (2) et le pied de support sont reliés par une articulation (21).

5. Dispositif selon la revendication 4, caractérisé en ce que l'accumulateur d'énergie (3) agit sur l'articulation (21).

6. Dispositif selon l'une des revendications 1 à 5, caractérisé en ce que le montant de support (2) peut être détaché de la colonne A (1).

7. Dispositif selon la revendication 6, caractérisé en ce que le montant de support (2) peut être détaché de la colonne A (1) au point d'articulation (4).

8. Dispositif selon l'une des revendications 1 à 7, caractérisé en ce que le point d'articulation (4) est réalisé sous forme de joint à rotule (5, 6).

9. Dispositif selon l'une des revendications 1 à 8, caractérisé en ce que le montant de support (2), dans la position de repos, est disposé dans la colonne A (1) se dressant au-dessus du plan de carrosserie.

10. Dispositif selon l'une des revendications 1 à 9, caractérisé en ce que le montant de support (2) peut être pivoté avec son extrémité inférieure à partir de la position de repos vers un noeud d'assemblage (17) formé par le dispositif d'appui (18, 19), dans la position de support.

11. Dispositif selon l'une des revendications 1 à 10, caractérisé en ce que l'accumulateur d'énergie (3) peut être amené en prise avec le montant de support (2) par l'intermédiaire d'un élément d'entraînement (7), au moins lors de l'entraînement dans la position de support.

12. Dispositif selon la revendication 11, caractérisé en ce que l'élément d'entraînement (17) peut être sorti de son engagement avec le montant de support (2), lors de l'ouverture de la porte de véhicule (24).

13. Dispositif selon l'une des revendications 1 à 12, caractérisé en ce que la position de support du montant de support (2) est verrouillée.
